# EUROPEAN PATENT APPLICATION

(11) **EP 4 592 114 A1**
(43) Date of publication of application: **30.07.2025**
(21) Application number: 23867395.8
(22) Date of filing: 14.09.2023
(51) Int. Cl.: B60K 1/00

(54) **ELECTRIC DRIVE ASSEMBLY AND VEHICLE**

(30) Priority: 19.09.2022 CN 202211138595
(71) Applicant: Beijing Chehejia Automobile Technology Co., Ltd., Beijing 101300 (CN)
(72) Inventor: WANG, Junzheng, Beijing 101300 (CN); ZHENG, Weiguang, Beijing 101300 (CN); WU, Xiaodong, Beijing 101300 (CN)
(74) Representative: von Bülow & Tamada
(86) International application number: PCT/CN2023/118890
(87) International publication number: WO 2024/061106

(57) **Abstract**

An electronic drive assembly and a vehicle. The electric drive assembly comprises: a housing provided with an accommodating cavity therein; a motor controller (2) provided in the accommodating cavity and provided with a power module circuit therein; a motor provided on the housing and electrically connected to the power module circuit; and a booster device provided in the accommodating cavity, the booster device including a filter circuit and a relay (4), the filter circuit being electrically connected to the motor controller (2) and the relay (4), and the relay (4) being electrically connected to a motor neutral point of the motor.

## Description

### CROSS-REFERENCE TO RELATED APPLICATION

This application is based on Chinese patent application with application number of 202211138595.8 and application date of September 19, 2022, and claims the priority of this Chinese patent application, the entire contents of which are hereby incorporated into this application by reference.

### FIELD

The present disclosure relates to the technical field of vehicle accessories, in particular to an electric drive assembly and a vehicle.

### BACKGROUND

With the rapid development of automobile power battery technology and users' higher requirements for the cruising range of electric vehicles, the battery capacity of electric vehicles is gradually increasing. At present, most charging piles have low output voltage and low charging power, and it takes a long time to charge large-capacity power batteries. In order to improve the charging rate of the battery pack, the charging voltage is mainly increased by a special booster device, so as to improve the charging power and shorten the charging time.

The existing booster device basically arranges capacitors, inductors, relays and cooling structures in a box, and mounts them at the lower end of the rear floor through bolts. Two high-voltage wires led from the power battery are connected with the booster device, and one high-voltage wire is led from the motor neutral point of the electric drive unit and the negative pole of the motor controller to connect with the booster device, which leads to a long high-voltage wire harness and high cost.

### SUMMARY

In order to solve the above technical problems, the present disclosure provides an electric drive assembly and a vehicle.

In a first aspect, the present disclosure provides an electric drive assembly including:
a housing having an accommodating cavity therein;
a motor controller, arranged in the accommodating cavity and provided with a power module circuit;
a motor, arranged on the housing and electrically connected to the power module circuit;
a booster device, arranged in the accommodating cavity, and including a filter circuit and a relay, wherein the filter circuit is electrically connected to the motor controller and the relay, and the relay is electrically connected to a motor neutral point of the motor.

In some embodiments, the electric drive assembly further includes a first conductive busbar arranged in the accommodating cavity, the motor controller is provided with a second conductive busbar electrically connected to the filter circuit, and the first conductive busbar is connectable to the second conductive busbar.

In some embodiments, the housing is provided with a connector for inserting a high-voltage positive input wire harness of a power battery, and the high-voltage positive input wire harness is capable to be electrically connected to the first conductive busbar.

In some embodiments, the housing is provided with a mounting hole corresponding to a connection position of the first conductive busbar and the second conductive busbar, and the mounting hole is configured for a fastener to pass through to connect the first conductive busbar and the second conductive busbar.

In some embodiments, the housing is further provided with a cover plate which is capable to cover the mounting hole, and the cover plate is detachably connected to the housing.

In some embodiments, the filter circuit is arranged in the motor controller, a third conductive busbar electrically connected to the filter circuit is arranged on the motor controller, and an input conductive busbar electrically connected to the third conductive busbar is arranged on the relay.

In some embodiments, the relay is further provided with an output conductive busbar, and the output conductive busbar is connected to the motor neutral point; the motor neutral point is provided with a neutral point conductive busbar, and the output conductive busbar is connected to the neutral point conductive busbar.

In some embodiments, the electric drive assembly further includes a wire harness arranged in the accommodating cavity, one end of the wire harness is connected to the relay, and the other end of the wire harness is connected to the motor controller, and the motor controller controls on-off of the relay through the wire.

In some embodiments, the motor controller includes a PCB (printed circuit board) board, the relay includes a circuit board, and the wire harness is connected between the PCB board and the circuit board.

In some embodiments, the housing includes a first housing and a second housing which are detachably connected, the accommodating cavity is formed between the first housing and the second housing, the motor controller is mounted in the first housing, and the relay is mounted in the second housing.

In some embodiments, the electric drive assembly further includes a reducer, and the housing further includes a third housing which is detachably connected to the second housing, and the reducer is arranged between the third housing and the second housing, and the second housing is provided with a through hole for an output shaft of the reducer to pass through.

In some embodiments, the housing further includes a fourth housing detachably connected to the third housing, the motor is arranged between the third housing and the fourth housing, and the motor is connected to the reducer.

In some embodiments, the motor is provided with a first UVW conductive busbar, and the motor controller is provided with a second UVW conductive busbar, the first UVW conductive busbar passes through the second housing and extends into the accommodating cavity, and the first UVW conductive busbar is connected to the second UVW conductive busbar.

In some embodiments, the second housing is provided with at least four partition edges arranged at intervals, and a partition cavity is formed between two adjacent partition edges;
the first UVW conductive busbar includes a first U busbar, a first V busbar and a first W busbar, and the first U busbar, the first V busbar and the first W busbar are respectively located in different partition cavities.

In some embodiments, the electric drive assembly further including a high-voltage positive input wire harness, a positive high-voltage wire harness and a negative high-voltage wire harness, wherein one end of the high-voltage positive input wire harness is connected to a power battery, and the other end of the high-voltage positive input wire harness is electrically connected to the filter circuit through the motor controller, and the positive high-voltage wire harness and the negative high-voltage wire harness are both connected to the power module circuit and the power battery of the motor controller.

In a second aspect, the present disclosure provides a vehicle including the electric drive assembly according to the first aspect.

In some embodiments, the vehicle further including: a subframe and a rear bumper, wherein the electric drive assembly is mounted on the subframe; in a forward direction of the vehicle, the power battery is located in front of the electric drive assembly, and the rear bumper is located in the subframe.

By arranging both the booster device and the motor controller in the accommodating cavity of the housing, the filter circuit and the relay are both electrically connected to the motor controller, and the relay is connected to the motor neutral point of the motor. The high-voltage positive input wire harness led out from the power battery can be connected to the filter circuit through the motor controller, filtered by the filter circuit, and then connected to the motor neutral point through the relay. Subsequently, after being boosted by the motor and power module circuit to charge the power battery. So that the booster device and the motor controller share a negative pole, two high-voltage connecting wires between the power battery and the external booster device can be optimized into a high-voltage wire between the power battery and the electric drive assembly, and a high-voltage wire harness from the negative pole of the motor controller to the booster device is omitted, so that the length of the high-voltage line can be reduced, the cost can be reduced, and the motor controller and the booster device can be protected.

### BRIEF DESCRIPTION OF THE DRAWINGS

The accompanying drawings, which are incorporated in and constitute a part of this specification, illustrate embodiments consistent with the present disclosure and together with the description, serve to explain the principles of the present disclosure.

In order to explain the technical solution in the embodiments of the present disclosure or the prior art more clearly, the drawings needed in the description of the embodiments or the prior art will be briefly introduced below. Apparently, for persons skilled in the art, other drawings can be obtained according to these drawings without expenditure of creative labor.
FIG. 1 is a disassembled schematic diagram of an electric drive assembly according to an embodiment of the present disclosure;
FIG.2 is a schematic diagram of a partial structure of an electric drive assembly according to an embodiment of the present disclosure;
FIG.3 is a schematic diagram of an external structure of the electric drive assembly according to an embodiment of the present disclosure;
FIG.4 is a partial schematic view of a vehicle according to an embodiment of the present disclosure.

Reference numeral:
11. First housing; 12. Second housing; 121. Mounting hole; 122. Partition edge; 123. Cover plate; 124. Through holes; 13. Third housing; 14. Fourth housing;
2. Motor controller; 21. PCB board; 22. Second conductive busbar; 23. Second UVW conductive busbar; 24. Third conductive busbar;
31. Neutral conductive busbar; 32. First UVW conductive busbar; 321. First U busbar; 322. First V busbar; 323. First W busbar;
4. Relay; 41. Input conductive busbar; 42. Output conductive busbar;
5. First conductive busbar;
6. Wire harness;
7. Connector;
8. High-voltage positive input wire harness;
9. Positive high-voltage wire harness;
10. Negative high-voltage wire harness;
20. Power battery;
30. Subframe;
40. Rear bumper.

### DETAILED DESCRIPTION

In order to understand the above objects, features and advantages of the present disclosure more clearly, the solution of the present disclosure will be further described below. It should be noted that the embodiments of the present disclosure and the features in the embodiments can be combined with each other without conflict.

In the following description, many specific details are set forth in order to fully understand the present disclosure, but the present disclosure may be practiced in other ways than those described herein; Apparently, the embodiments in the specification are only part of the embodiments of the present disclosure, not all of them.

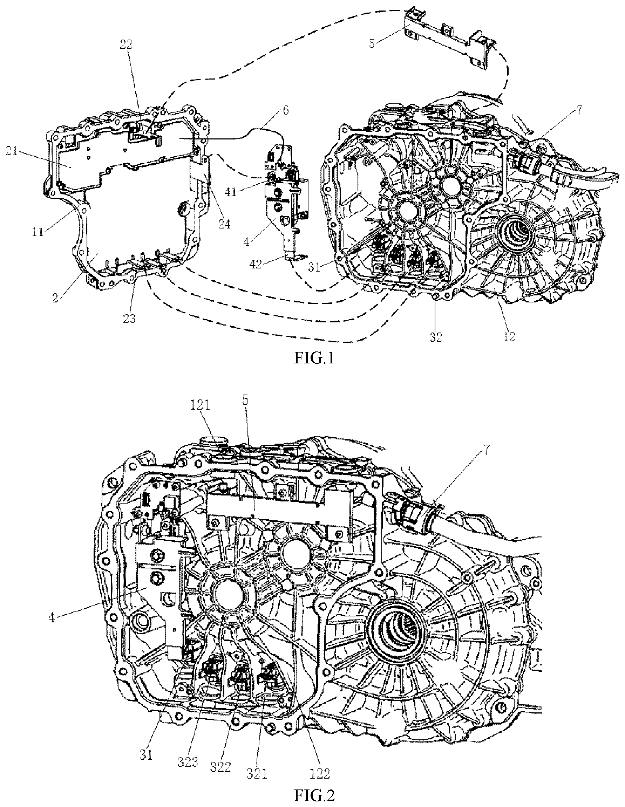

As shown in FIG. 1 to FIG. 3, the present disclosure provides an electric drive assembly including a housing, a motor controller 2, a motor and a booster device. Wherein, the housing is provided with an accommodating cavity. The motor controller 2 is arranged in the accommodating cavity, and the motor controller 2 is provided with a power module circuit. The motor is arranged on the housing and electrically connected to the power module circuit. The booster device is arranged in the accommodating cavity, and the booster device includes a filter circuit and a relay 4, wherein the filter circuit is electrically connected to the motor controller 2 and the relay 4, and the relay 4 is electrically connected to a motor neutral point of the motor.

It can be understood that both the booster device and the motor controller 2 are arranged in the accommodating cavity of the housing, so that the motor controller 2 and the booster device can be protected, and the booster device is integrated with the motor and the motor controller 2, so that the structure is compact, and the whole electric drive assembly is located on the subframe 30, thus improving the high-voltage safety when the vehicle is rear-ended; Moreover, since both the filter circuit and the relay 4 are electrically connected to the motor controller 2, and the relay 4 is connected to the motor neutral point of the motor, the high-voltage positive input wire harness 8 led out from the power battery 20 can be connected to the filter circuit through the motor controller 2, filtered by the filter circuit, and then connected to the motor neutral point through the relay 4. Subsequently, after being boosted by the motor and power module circuit to charge the power battery 20. So that the booster device and the motor controller 2 share a negative pole, two high-voltage connecting wires between the power battery 20 and the external booster device can be optimized into a high-voltage wire between the power battery 20 and the electric drive assembly, and a high-voltage wire harness from the negative pole of the motor controller to the booster device is omitted, so that the length of the high-voltage line can be reduced, the cost can be reduced, and the motor controller and the booster device can be protected..

Moreover, compared with the prior art, it is necessary to mount an electric drive unit and a booster device, and the booster device is integrated into the electric drive assembly, so that the assembly process can be simplified and the working hours can be reduced; and due to the relay 4 is connected to the motor neutral point of the motor, the booster device can utilize the inductance of the motor, so that a cooling design of the booster device itself can be omitted, the assembly process can be further simplified and the working hours can be reduced.

As shown in FIG. 1, in some embodiments, the electric drive assembly further includes a wire harness 6, which is arranged in the accommodating cavity, one end of the wire harness 6 is connected to the relay 4, and the other end is connected to the motor controller 2, and the motor controller 2 can control the on-off of the relay 4 through the wire harness 6. In this way, the low-voltage control line of the booster device is integrated into the electric drive assembly, and the on-off of the relay 4 is controlled by the motor controller 2 through the wire harness 6, so that the length of the wire harness can be reduced and the cost can be reduced.

In some embodiments, the motor controller 2 includes a PCB board 21, and the relay 4 includes a circuit board. The wire harness 6 is connected between the PCB board 21 and the circuit board, and the motor controller 2 controls the on-off of the relay 4 through the wire harness 6, thereby realizing the on-off of the boost circuit.

As shown in FIG. 1 and FIG. 2, in some embodiments, the electric drive assembly further includes a first conductive busbar 5 arranged in the accommodating cavity, and the motor controller 2 is provided with a second conductive busbar 22 electrically connected to the filter circuit, and the second conductive busbar 22 is connected to the first conductive busbar 5.

It should be noted that the first conductive busbar 5 and the second conductive busbar 22 are detachably connected to facilitate the replacement of the first conductive busbar 5 and/or the second conductive busbar 22.

Further, the housing is provided with a connector 7 for inserting the high-voltage positive input wire harness 8 of the power battery 20, and the high-voltage positive input wire harness 8 can be electrically connected to the first conductive busbar 5. It can be understood that the connector 7 fixes the high-voltage positive input wire harness 8, so that the first conductive busbar 5 and the high-voltage positive input wire harness 8 are electrically connected, and the first conductive busbar 5 is electrically connected to the second conductive busbar 22, thereby realizing the electrical connection between the high-voltage positive input wire harness 8 and the motor controller 2. The connector 7 is preferably a PIN connector.

By using the connector 7, the first conductive busbar 5 and the second conductive busbar 22 to realize the connection between the high-voltage positive input wire harness 8 and the motor controller 2, the high-voltage positive input wire harness 8 and the motor controller 2 can be stably connected.

As shown in FIG. 1 and FIG. 2, the filter circuit is arranged in the motor controller 2, the motor controller 2 is provided with a third conductive busbar 24 electrically connected to the filter circuit, and the relay 4 is provided with an input conductive busbar 41 electrically connected to the third conductive busbar 24. The filter circuit is arranged in the motor controller 2, so that the motor controller 2 and the booster device share a set of filter circuit.

It should be noted that the third conductive busbar 24 and the input conductive busbar 41 are detachably connected, which facilitates the assembly and disassembly of the electric drive assembly and the replacement of the third conductive busbar 24 and/or the input conductive busbar 41.

As shown in FIG. 1 and FIG. 2, the relay 4 is also provided with an output conductive busbar 42, and the output conductive busbar 42 is connected to the motor neutral point. In some embodiments, the motor neutral point is provided with a neutral point conductive busbar 31, and the output conductive busbar 42 of the relay 4 is connected to the neutral point conductive busbar 31.

As shown in FIG. 1 and FIG. 2, in some embodiments, the housing includes a first housing 11 and a second housing 12 which are detachably connected, and the above-mentioned accommodation cavity is formed between the first housing 11 and the second housing 12, and the relay 4 is mounted on the second housing 12. The first conductive busbar 5 and the connector 7 are both mounted on the second housing 12, and the motor controller 2 is mounted on the first housing 11.

Further, the housing is provided with mounting holes 121 at positions corresponding to the first conductive busbar 5 and the second conductive busbar 22, and the mounting holes 121 can allow fasteners to pass through to connect the first conductive busbar 5 and the second conductive busbar 22. Specifically, the second housing 12 is provided with the mounting holes 121 at positions corresponding to the first conductive busbar 5 and the second conductive busbar 22. By arranging the mounting holes 121, the first conductive busbar 5 and the second conductive busbar 22 can be fixed by fasteners after the first housing 11 and the second housing 12 are connected, thus ensuring the stable connection of the first conductive busbar 5 and the second conductive busbar 22. The fastener mentioned above is preferably a screw.

In some embodiments, the housing is further provided with a cover plate 123 that can cover the mounting hole 121, and the cover plate 123 is detachably connected to the housing. Specifically, the cover plate 123 is detachably connected to the second housing 12. By providing the cover plate 123, the mounting hole 121 can be covered after the first conductive busbar 5 and the second conductive busbar 22 are connected by fasteners, to prevent impurities or water vapor from entering the accommodating cavity.

In some embodiments, the second housing 12 is provided with mounting holes 121 for fasteners to pass through corresponding to the connection positions of the first conductive busbar 5 and the high-voltage positive input wire harness 8, the connection positions of the third conductive busbar 24 and the input conductive busbar 41, and the connection positions of the output conductive busbar 42 and the neutral conductive busbar 31. Fasteners are preferably screws, which can fix the first conductive busbar 5 and the high-voltage positive input wire harness 8, the third conductive busbar 24 and the input conductive busbar 41, the output conductive busbar 42 and the neutral conductive busbar 31 located in the accommodating cavity after the first housing 11 and the second housing 12 are connected, to ensure the connection stability. In some embodiments, the second housing 12 is provided with a cover plate 123 corresponding to each of the mounting holes 121.

As shown in FIG.1 and FIG.2, the motor is provided with a first UVW conductive busbar 32, and the motor controller 2 is provided with a second UVW conductive busbar 23. The first UVW conductive busbar 32 passes through the second housing 12 and extends into the accommodating cavity, and the first UVW conductive busbar 32 is connected to the second UVW conductive busbar 23.

Further, as shown in FIG.2, the second housing 12 is provided with at least four partition edges 122 arranged at intervals, and a partition cavity is formed between two adjacent partition edges 122. The first UVW conductive busbar 32 includes a first U busbar 321, a first V busbar 322 and a first W busbar 323, which are located in different partition cavities. By setting the partition edge 122 to form a partition cavity, the first U busbar 321, the first V busbar 322 and the first W busbar 323 can be partitioned, and the safety is improved.

Further, the neutral point conductive busbar 31 passes through the second housing 12 and extends into the accommodating cavity, and the neutral point conductive busbar 31 is located in a partition cavity. In some embodiments, the neutral conductive busbar 31 and the first U busbar 321, the first V busbar 322 and the first W busbar 323 are located in different partition cavities, and there are five partition edges 122. The neutral point conductive busbar 31 and the first UVW conductive busbar 32 are partitioned by the partition edge 122, so that the safety is improved.

Further, the second UVW conductive busbar 23 includes a second U busbar, a second V busbar and a second W busbar, and the second housing 12 is provided with mounting holes 121 for fasteners to pass through corresponding to the connection positions of the first U busbar 321 and the second U busbar, the connection positions of the first V busbar 322 and the second V busbar, and the connection positions of the first W busbar 323 and the second W busbar. The fastener is preferably a screw, which can ensure the connection stability of the first UVW conductive busbar 32 and the second UVW conductive busbar 23. The second housing 12 is provided with a cover plate 123 corresponding to each of the mounting holes 121.

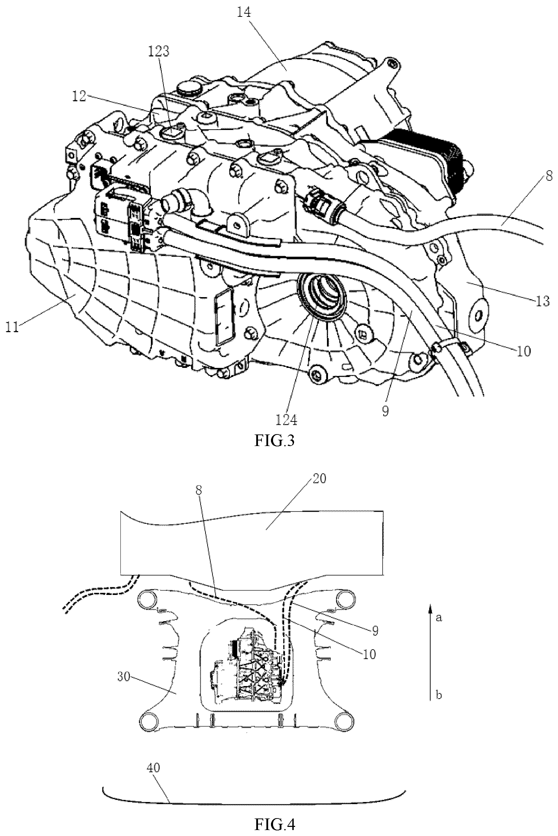

As shown in FIG.3, the electric drive assembly also includes a reducer. The housing also includes a third housing 13, which is detachably connected to the second housing 12. The reducer is arranged between the third housing 13 and the second housing 12, and the second housing 12 is provided with a through hole 124 for an output shaft of the reducer to pass through.

Further, the housing also includes a fourth housing 14, which is detachably connected to the third housing 13. A motor is arranged between the third housing 13 and the fourth housing 14, and the motor is connected to the reducer. In some embodiments, the neutral point conductive busbar 31 and the first UVW conductive busbar 32 of the motor both pass through the third housing 13 and the second housing 12 and extend into the accommodating cavity.

By arranging the housings as the first housing 11, the second housing 12, the third housing 13 and the fourth housing 14 which are detachably connected, the assembly of the electric drive assembly is facilitated, and the motor and the reducer are separated from the motor controller 2 and the booster device to avoid interference with each other.

As shown in FIG.3, the electric drive assembly also includes a high-voltage positive input wire harness 8, a positive high-voltage wire harness 9 and a negative high-voltage wire harness 10. One end of the high-voltage positive input wire harness 8 can be connected to the power battery 20, and the other end can be electrically connected to the filter circuit through the motor controller 2. Both the positive high-voltage wire harness 9 and the negative high-voltage wire harness 10 can be connected to the power module circuit of the motor controller 2 and the power battery 20.

In some embodiments, the high-voltage positive input wire harness 8 can be plugged into the connector 7 and electrically connected to the filter circuit through the first conductive busbar 5 and the second conductive busbar 22. The positive high-voltage wire harness 9 is connected to a positive port of the power battery 20 and the power module circuit of the motor controller 2, and the negative high-voltage wire harness 10 is connected to a negative port of the power battery 20 and the power module circuit of the motor controller 2.

In combination with the above, it can be understood that the high-voltage positive input wire harness 8 led from the power battery 20 is connected with one end of the first conductive busbar 5 through the connector 7, the other end of the first conductive busbar 5 is connected with the second conductive busbar 22 of the motor controller 2, and the second conductive busbar 22 is connected with the filter circuit. The filter circuit filters the positive input, and after filtering, then connects with the input conductive busbar 41 of the relay 4 through the third conductive busbar 24. The relay 4 is connected with the neutral point conductive busbar 31 of the motor through the output conductive busbar 42, and the second UVW conductive busbar 23 of the motor is connected with the first UVW conductive busbar 32 of the motor controller 2, and is finally boosted by the power module circuit and connected to the positive and negative poles of the power battery 20 to charge the power battery 20.

In this process, the motor controller 2 controls the on-off of the relay 4 through the wire harness 6, to achieve the object of controlling the on-off of the booster circuit.

It should be noted that the first conductive busbar 5, the second conductive busbar 22, the third conductive busbar 24, the first UVW conductive busbar 32, the second UVW conductive busbar 23, the neutral point conductive busbar 31, the input conductive busbar 41 and the output conductive busbar 42 are all preferably copper busbars.

In the electric drive assembly, the booster device is integrated into the three-in-one electric drive unit, and the booster device and the motor controller 2 share a negative electrode. Only one high-voltage positive input wire harness 8, one positive high-voltage wire harness 9 and one negative high-voltage wire harness 10 are needed between the power battery 20 and the electric drive assembly, and the low-voltage control wire harness of the booster device (that is, the above-mentioned wire harness 6) is integrated into the electric drive assembly, and the cooling design and grounding design of the booster device are cancelled, so that a plurality of connecting pipelines between the booster device and the whole vehicle are omitted, and the booster device does not need to be fixed by bolts on the rear floor, simplifying the assembly process during the final assembly of the rear drive axle.

Moreover, compared with the technology, the booster device does not need to be stacked with the high-voltage distribution assembly (ODU) module, thus not occupying the Z-direction space of the vehicle body and increasing the volume of the trunk; And the high-voltage wiring from the top of the subframe 30 between the booster device and the power battery 20 is cancelled, thus solving the problem that the high-voltage wire harness and the trunking occupy the Z-direction space of the passenger compartment and affect the comfort of passengers.

Based on the same inventive concept, combined with the description of the electric drive assembly of the above embodiments, this embodiment provides a vehicle, which has the corresponding technical effects of the electric drive assembly of the above embodiments, and will not be repeated here.

A vehicle includes the electric drive assembly and the power battery 20 of the above embodiments, and the power battery 20 is electrically connected to the electric drive assembly. Specifically, the high-voltage positive input wire harness 8 led from the power battery 20 is plugged into the connector 7, and the positive high-voltage wire harness 9 and the negative high-voltage wire harness 10 led from the electric drive assembly are both connected to the power battery 20. When the power battery 20 is connected to the charging pile, the power battery 20 is quickly charged through the electric drive assembly.

As shown in FIG.4, the vehicle further includes a subframe 30 and a rear bumper 40, and the electric drive assembly is mounted on the subframe 30. In the forward direction of the vehicle, the power battery 20 is located in front of the electric drive assembly, and the rear bumper 40 is located behind the subframe 30. The forward direction of the vehicle is the ba direction in FIG. 4.

In this way, the booster device is located on the subframe 30, and the electric drive assembly has no high-voltage line connecting the power battery 20 between the subframe 30 and the rear bumper 40, thus improving the high-voltage safety performance when the vehicle is hit by a rear-end collision.

It should be noted that in the present disclosure, relational terms such as "first" and "second" are only used to distinguish one entity or operation from another entity or operation, and do not necessarily require or imply that there is any such actual relationship or order between these entities or operations. Moreover, the term "including" or any other variation thereof is intended to cover non-exclusive inclusion, so that a process, method, article or equipment including a series of elements includes not only those elements, but also other elements not explicitly listed or elements inherent to such process, method, article or equipment. Without further restrictions, an element defined by the phrase "including one" does not exclude the existence of other identical elements in the process, method, article or equipment including the element.

What has been described above is only the specific embodiments of the present disclosure, so that those skilled in the art can understand or realize the present disclosure. Many modifications to these embodiments will be obvious to those skilled in the art, and the general principles defined herein can be implemented in other embodiments without departing from the spirit or scope of this disclosure. Therefore, the present disclosure will not be limited to the embodiments described herein, but is to be accorded the widest scope consistent with the principles and novel features disclosed herein.

## Claims

1. An electric drive assembly comprising:
a housing having an accommodating cavity therein;
a motor controller, arranged in the accommodating cavity and provided with a power module circuit;
a motor, arranged on the housing and electrically connected to the power module circuit;
a booster device, arranged in the accommodating cavity, and comprising a filter circuit and a relay, wherein the filter circuit is electrically connected to the motor controller and the relay, and the relay is electrically connected to a motor neutral point of the motor.

2. The electric drive assembly according to claim 1, wherein the electric drive assembly further comprises a first conductive busbar arranged in the accommodating cavity, the motor controller is provided with a second conductive busbar electrically connected to the filter circuit, and the first conductive busbar is connectable to the second conductive busbar.

3. The electric drive assembly according to claim 2, wherein the housing is provided with a connector for inserting a high-voltage positive input wire harness of a power battery, and the high-voltage positive input wire harness is capable to be electrically connected to the first conductive busbar.

4. The electric drive assembly according to claim 2, wherein the housing is provided with a mounting hole corresponding to a connection position of the first conductive busbar and the second conductive busbar, and the mounting hole is configured for a fastener to pass through to connect the first conductive busbar and the second conductive busbar.

5. The electric drive assembly according to claim 4, wherein the housing is further provided with a cover plate which is capable to cover the mounting hole, and the cover plate is detachably connected to the housing.

6. The electric drive assembly according to claim 1, wherein the filter circuit is arranged in the motor controller, a third conductive busbar electrically connected to the filter circuit is arranged on the motor controller, and an input conductive busbar capable to be electrically connected to the third conductive busbar is arranged on the relay.

7. The electric drive assembly according to claim 6, wherein the relay is further provided with an output conductive busbar, and the output conductive busbar is connected to the motor neutral point; the motor neutral point is provided with a neutral point conductive busbar, and the output conductive busbar is connected to the neutral point conductive busbar.

8. The electric drive assembly according to claim 1, wherein the electric drive assembly further comprises a wire harness arranged in the accommodating cavity, one end of the wire harness is connected to the relay, the other end of the wire harness is connected to the motor controller, and the motor controller controls on-off of the relay through the wire.

9. The electric drive assembly according to claim 8, wherein the motor controller comprises a PCB (printed circuit board) board, the relay comprises a circuit board, and the wire harness is connected between the PCB board and the circuit board.

10. The electric drive assembly according to claim 1, wherein the housing comprises a first housing and a second housing which are detachably connected, the accommodating cavity is formed between the first housing and the second housing, the motor controller is mounted in the first housing, and the relay is mounted in the second housing.

11. The electric drive assembly according to claim 10, wherein the electric drive assembly further comprises a reducer, and the housing further comprises a third housing which is detachably connected to the second housing, and the reducer is arranged between the third housing and the second housing, and the second housing is provided with a through hole for an output shaft of the reducer to pass through.

12. The electric drive assembly according to claim 11, wherein the housing further comprises a fourth housing detachably connected to the third housing, the motor is arranged between the third housing and the fourth housing, and the motor is connected to the reducer.

13. The electric drive assembly according to claim 10, wherein the motor is provided with a first UVW conductive busbar, and the motor controller is provided with a second UVW conductive busbar, the first UVW conductive busbar passes through the second housing and extends into the accommodating cavity, and the first UVW conductive busbar is connected to the second UVW conductive busbar.

14. The electric drive assembly according to claim 13, wherein the second housing is provided with at least four partition edges arranged at intervals, and a partition cavity is formed between two adjacent partition edges;
the first UVW conductive busbar comprises a first U busbar, a first V busbar and a first W busbar, and the first U busbar, the first V busbar and the first W busbar are respectively located in different partition cavities.

15. The electric drive assembly according to claim 1, further comprising a high-voltage positive input wire harness, a positive high-voltage wire harness and a negative high-voltage wire harness, wherein one end of the high-voltage positive input wire harness is connected to a power battery, and the other end of the high-voltage positive input wire harness is electrically connected to the filter circuit through the motor controller, and the positive high-voltage wire harness and the negative high-voltage wire harness are both connected to the power module circuit of the motor controller and the power battery.

16. A vehicle, comprising the electric drive assembly according to any one of claims 1 to 15.

17. The vehicle according to claim 16, further comprising: a subframe and a rear bumper, wherein the electric drive assembly is mounted on the subframe; in a forward direction of the vehicle, the power battery is located in front of the electric drive assembly, and the rear bumper is located in the subframe.
